# EUROPEAN PATENT SPECIFICATION

(11) **EP 0 797 916 B1**
(45) Date of publication and mention of the grant of the patent: **18.07.2001**
(21) Application number: 97200872.6
(22) Date of filing: 25.03.1997
(51) Int. Cl.: A01M 7/00, A01M 21/04

(54) **Method and device for supplying material to growth present on a surface**
Verfahren und Vorrichtung für die Aufgabe von Material an Wachstum auf einer Oberfläche
Méthode et dispositif pour fournir des produits à de la végétation présente sur une surface

(30) Priority: 26.03.1996 NL 1002710
(43) Date of publication of application: 01.10.1997
(73) Proprietor: Kamps de Wild B.V., 6902 PK Zevenaar (NL)
(72) Inventor: Timmermans, Antonius Johannes Maria, 6708 CC Wageningen (NL); Visser, Rogier, 2625 DP Delft (NL); Schouts, Johannes, 6905 SE Zevenaar (NL)
(74) Representative: Vollebregt, Cornelis Jacobus, Ir.

(56) References cited:
- WO-A-89/12510
- DE-A- 4 329 343
- DE-A- 4 413 739
- US-A- 5 144 767
- US-A- 5 222 324

## Description

The invention relates to a method for supplying material to growth present on a surface, wherein detection means are used for establishing the presence or absence of said growth, which detection means are moved over said surface and which activate a supply element for supplying material to the growth upon detecting growth.

In particular the combatting of growth in the form of weeds is considered in this connection, whereby an optimum use must be made of herbicides in order to prevent environmental problems. It will be apparent, however, that the proposal according to the present invention may also be used for supplying nutrients to plants or the like in an optimum manner.

Several methods have already been proposed, whereby the intensity of the sunlight as well as the red and infrared radiation emitted by the growth are measured, and whereby the supply element for supplying material may or may not be activated in dependence on the ratio between said measured values. The construction of the device required for carrying out said method is complicated and vulnerable, whilst furthermore the device can only be used during the daytime.

Furthermore a system has been proposed wherein two active exposure sources are used, one source emitting red light and the other emitting infrared light. The light reflected from the ground and/or from the growth is detected by means of a detector. The signal delivered by said detector depends on the ratio between reflected red light and reflected infrared light. Since growth mainly reflects infrared light and the ground reflects red light as well as infrared light, it is possible to distinguish growth from the ground in this manner. A drawback is inter alia the fact that several light sources are required and that it will be difficult to distinguish between the growth and the ground when the reflectivity of the underground is high. One such apparatus is disclosed in WO-A-8912510.

The object of the invention is to obtain a method and a device wherein the drawbacks of the known methods and devices can be avoided.

According to the invention this objective can be accomplished in that said surface is illuminated by means of a light source which is moved over the surface, and in that the detection means moving over said surface along with said light source detect infrared radiation and generate a signal for activating said supply element when a predetermined threshold value of the detected infrared radiation is exceeded.

Use is thereby made of the fact that the chlorophyll in the growth will emit infrared light when the growth is illuminated.

In this manner it is possible to effect an efficient precise supply of material in desired places while using simple means, whilst all this can take place totally independently of the weather conditions, also at night.

A simple and efficient device, in particular suitable for carrying out the method according to the invention, is a movable device for supplying material to growth present on a surface, which device comprises detection means for detecting said growth as well as a supply element, which can be activated for supplying material to the growth upon detection of said growth by said detection means, whereby the device is in accordance with the invention provided with a light source which emits light in the direction of said surface, and with a detector which measures infrared radiation, via which detector said supply element can be put into operation when the level of the detected infrared radiation exceeds a predetermined threshold value.

A device of this type may be of simple construction, which is not very liable to exhibit failure.

Another aspect of the invention relates to a device for distinguishing chlorophyll-containing objects from their surroundings.

In practice there is need for a simple device for recognizing the presence of chlorophyll-containing objects.

According to the invention this can be achieved by means of a device which comprises a light source, by means of which light can be emitted, as well as a detector which measures infrared radiation, via which detector signals can be generated when the level of the detected radiation exceeds a predetermined threshold value.

The signals generated by the presence of chlorophyll-containing objects may be used for initiating desired processes or activities, for example.

The invention will be explained in more detail hereafter with reference to the accompanying Figures.

Figure 1 is a diagrammatic plan view of a device according to the invention.

Figure 2 shows a larger-scale block diagram, which inter alia includes the light source, the infrared detector and the supply element.

The device according to the invention comprises a vehicle 1, for example a farm tractor, which is provided with a frame 2 and with wheels 3 supporting said frame. During operation the speed of the vehicle 1 in the direction according to arrow A is measured by means of sensors 4 coupled to a pair of wheels 3 and supplied to a central data processing unit or computer 5.

The vehicle is furthermore provided with a plurality of detectors 6 arranged in a row extending perpendicularly to the intended direction of movement of the device during operation (arrow A). Each detector 6 is connected to a nearby supply element 7 for supplying material to growth present on the ground.

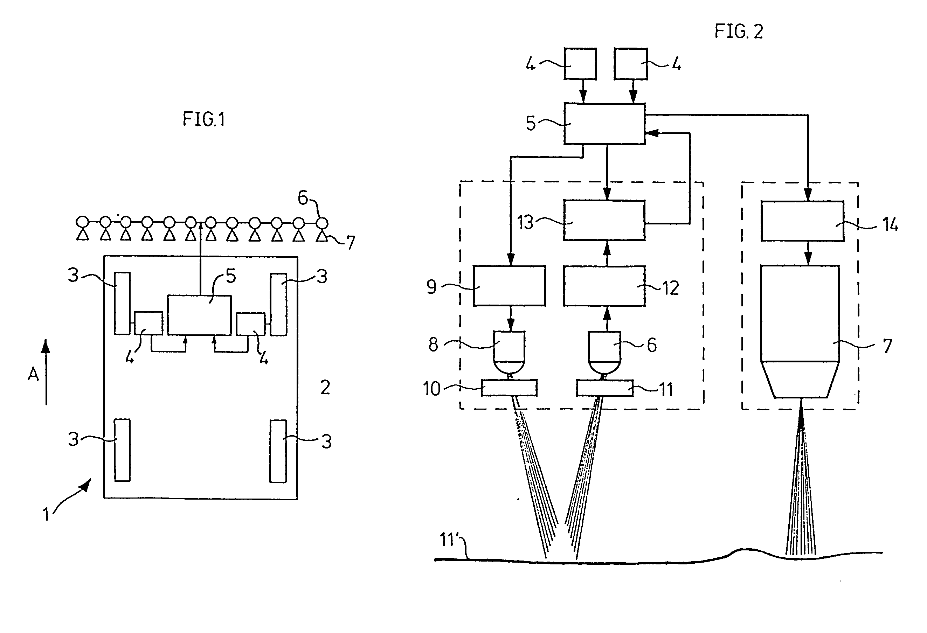

As is shown in more detail in Figure 2, a light source 8 emitting visible light during operation is disposed near each detector 6, said light source for example being an LED or a diode laser.

Said light source 8 is controlled from the central processing unit or computer 5. In order to regulate the light intensity a periodic, for example sinusoidal signal, which will generally have a frequency of 50 kHz, is transmitted from unit 5 to a control circuit 9 controlling the light source 8. It will be apparent, however, that it is also possible to use other frequencies.

An optical filter 10, which filters out any infrared components present in the light emitted by the light source 8, is provided before the light source 8.

As is indicated in Figure 2, the ground 11', on which growth may be present, is illuminated by means of the light source 8 and the growth present on the ground, for example weeds, will light up in the infrared range thereby, due to the presence of chlorophyll in the growth, whilst materials other than plants will not emit infrared radiation.

The infrared radiation will be detected by detector 6, which is for example a photo diode. In order to prevent visible light from reaching the detector 6, a filter 11 is provided before the detector, which filter only passes infrared radiation to detector 6, thus making detector 6 insensitive to reflection of visible light emitted by light source 8. Upon receipt of infrared radiation the detector will deliver a signal whose magnitude depends on the intensity of the received infrared radiation.

Sunlight contains an infrared component, which is able to reach the detector 6 despite the presence of the filter 11 and which may thus lead to a detector signal S1 being delivered. Detector signal S2, which has been generated by the infrared radiation emitted by the growth as a result of being illuminated by light source 8, varies in time in the same manner as the signal supplied to the light source 8 by the central processing unit 5, which signal generally has a frequency of 50 kHz. The detector signal S2 generated by the infrared radiation from the growth is a high-frequency signal, therefore, whereas the detector signal S1 that may be generated by the sunlight is a low-frequency signal. This makes it possible to separate the detector signal S2 generated by the illuminated growth from the total signal generated by detector 6.

The signal generated by detector 6 is supplied, via a pre-amplifier 12, to a lock-in amplifier 13, to which a clock signal of the same frequency and phase as the signal supplied to light source 8 is supplied from the central processing unit or computer 5. The component of the signal from detector 6 that is caused by the sunlight is thereby blocked. Thus the signal which is eventually delivered to the central processing unit or computer 5 by the lock-in amplifier solely depends on the signal generated by the detector 6, which signal in turn is dependent on the light source 8.

In this manner the operation of the device only depends on the radiation emitted by the light source 8 and is not influenced by radiation from sunlight, therefore, as a result of which the device is capable of operation during the daytime as well as at night, with identical results.

The signal delivered to the central processing unit or computer 5 via lock-in amplifier 13 is a measure of the quantity of plant material detected by detector 6. On the basis of this signal and the signals received from the speed sensors it is determined whether or not to activate a driving unit 14 for driving a supply element 7 for supplying material to the plant, for example a spray nozzle for supplying a liquid herbicide. This will take place when the signal received from detector 6 exceeds a threshold value.

When the detector 6 is disposed at some distance from the associated supply element 7, the central processing unit or computer 5 will have to take this distance into account when determining the time at which the driving element 14 is activated for putting the supply element 7 into operation after the detector 6 associated therewith has delivered a signal exceeding a predetermined threshold value upon detecting infrared radiation.

When the detector 6 and the supply element 7 associated therewith are disposed near each other, the supply element 7 can be put into operation immediately upon the threshold value of the signal delivered by detector 6 being exceeded. It will be apparent that in this manner each of the supply elements 7 arranged in a row can be put into operation independently of the other supply elements.

The construction is furthermore such that the supply elements will not be put into operation when the sensors 4 indicate that the vehicle 1 is stationary.

Of course additions to and modifications of the invention are conceivable within the spirit and scope of the invention.

Thus the above-described parts 5-14 may also be used for recognizing chlorophyll-containing objects other than weeds present on the ground, for example, whereby the element 7 being controlled during operation may be used for purposes other than supplying material to the objects being detected.

Furthermore it is possible to use a portable device instead of a device that is mounted on a vehicle.

## Claims

1. A device for distinguish chlorophyll-containing objects from their surroundings, characterized in that said device comprises a light source (8) in the light beam of which a filter (10) which does not transmit infrared radiation is disposed, by means of which light can be emitted, as well as a detector (6) which measures infrared radiation before which detector a filter (11) which only transmits infrared radiation is provided, via which detector signals can be generated when the level of the detected radiation exceeds a predetermined threshold value.

2. A device according to claim 1, characterized in that means for controlling said light source (5, 9) with a high-frequency periodic signal are provided, whilst said detector is connected to means which only transmit a high-frequency signal (13) emanating from said detector.

3. A device according to claim 1 or 2 for supplying material to growth present on a surface, characterized in that the device is movable and comprises a supply element (7), which can be activated for supplying material to the growth upon generation of the signal representing detection of said growth.

4. A device according to claim 3, characterized in that said device is provided with at least one sensor (4) which establishes the speed at which the device is moving, which sensor delivers a signal which influences the activation of said supply element (7).

## Patentansprüche

1. Vorrichtung zum Unterscheiden Chlorophyll enthaltender Objekte von deren Umgebung, dadurch gekennzeichnet, dass die Vorrichtung eine Lichtquelle (8), in deren Lichtstrahl ein Filter (10), welcher keine Infrarotstrahlung durchlässt, angeordnet ist, durch welche Lichtquelle Licht ausgesandt werden kann, sowie einen Detektor (6) aufweist, welcher Infrarotstrahlung misst, wobei vor dem Detektor ein Filter (11), das ausschließlich Infrarotstrahlung durchlässt, vorgesehen ist und wobei mittels des Detektors Signale erzeugt werden können, wenn das Niveau der festgestellten Strahlung einen bestimmten Schwellenwert übersteigt.

2. Vorrichtung nach Anspruch 1, dadurch gekennzeichnet, dass eine Einrichtung zum Steuern der Lichtquelle (5, 9) mit einem hochfrequenten, periodischen Signal vorgesehen ist, wobei der Detektor mit einer Einrichtung verbunden ist, die ausschließlich ein von dem Detektor ausgehendes, hochfrequentes Signal (13) überträgt.

3. Vorrichtung nach Anspruch 1 oder 2 zum Zuführen von Material zum Wachstum auf einer Oberfläche, dadurch gekennzeichnet, dass die Vorrichtung bewegbar ist und ein Zuführelement (7) aufweist, das zum Zuführen von Material zum Wachstum auf die Erzeugung des die Feststellung von Wachstum darstellenden Signals aktiviert werden kann.

4. Vorrichtung nach Anspruch 3, dadurch gekennzeichnet, dass die Vorrichtung mit wenigstens einem Sensor (4) versehen ist, welcher die Geschwindigkeit festlegt, mit der die Vorrichtung bewegbar ist, welcher Sensor ein Signal abgibt, das die Aktivierung des Zuführelementes (7) beeinflusst.

## Revendications

1. Dispositif destiné à distinguer des objets contenant de la chlorophylle de ce qui les entoure, caractérisé en ce que ledit dispositif comprend une source lumineuse (8) dans le faisceau lumineux de laquelle est ménagé un filtre (10) qui ne transmet pas de rayonnement infrarouge, grâce auquel de la lumière peut être émise, ainsi qu'un détecteur (6) qui mesure le rayonnement infrarouge, détecteur devant lequel est prévu un filtre (11) qui ne transmet qu'un rayonnement infrarouge, détecteur par l'intermédiaire duquel des signaux peuvent être générés lorsque le niveau du rayonnement détecté excède une valeur de seuil prédéterminée.

2. Dispositif selon la revendication 1, caractérisé en ce que des moyens destinés à contrôler ladite source lumineuse (5, 9) présentant un signal périodique haute fréquence sont prévus, tandis que ledit détecteur est relié à des moyens qui ne transmettent qu'un signal haute fréquence (13) se dégageant dudit détecteur.

3. Dispositif selon la revendication 1 ou la revendication 2, destiné à fournir une matière destinée à la croissance présente sur une surface, caractérisé en ce que le dispositif peut être déplacé et comprend un élément d'approvisionnement (7), qui peut être activé pour fournir une matière destinée à la croissance en générant le signal qui représente une détection de ladite croissance.

4. Dispositif selon la revendication 3, caractérisé en ce que ledit dispositif est équipé d'au moins un capteur (4) qui établit la vitesse à laquelle le dispositif se déplace, lequel capteur délivre un signal qui influence l'activation dudit élément d'approvisionnement (7).
